# EUROPÄISCHE PATENTANMELDUNG

(11) **EP 1 077 222 A1**
(43) Veröffentlichungstag der Anmeldung: **21.02.2001**
(21) Anmeldenummer: 00116218.9
(22) Anmeldetag: 04.08.2000
(51) Int. Cl.: C08F 8/34

(54) **Funktionalisierte doppelbindungsarme Kautschuke**

(30) Priorität: 17.08.1999 DE 19938859
(71) Anmelder: BAYER AG, 51368 Leverkusen (DE)
(72) Erfinder: Scholl, Thomas, Dr., 51469 Bergisch Gladbach (DE)

(57) **Zusammenfassung**

Die vorliegende Erfindung betrifft funktionalisierte doppelbindungsarme Isoolefin- und EPDM-Kautschuke mit einem Gehalt an Doppelbindungen von 0,001 bis 10 Gew.-% und einem Gehalt an hydrolysestabilen und nicht über Benzylgruppen gebundenen funktionellen Gruppen von 0,01 bis 25 Gew.-%, wobei die funktionellen Gruppen die Struktur

-Sₙ - R

besitzen. Die erfindungsgemäßen funktionalisierten doppelbindungsarmen Isoolefin- und EPDM-Kautschuke lassen sich in einfacher Weise durch Umsetzung entsprechender doppelbindungsarmer Kautschuke mit Sulfenylchloriden herstellen und eignen sich insbesondere zur Herstellung von Klebstoffen, Dichtstoffen, Lacken, Vulkanisaten und als Kautschukkomponente in Kautschuk/Kunststoff-Blends.

## Beschreibung

Die vorliegende Erfindung betrifft funktionalisierte doppelbindungsarme Isoolefin- und EPDM-Kautschuke, bei denen die funktionelle Gruppe auf spezielle Weise über Schwefelbrücken an den Kautschuk gebunden ist, ein Herstellungsverfahren für die Kautschuke, sowie die Verwendung der Kautschuke zur Herstellung von Kautschukformkörpern, Klebstoffen, Dichtstoffen, Lacken und Kautschuk/Kunststoff-Blends.

Funktionalisierte Kautschuke besitzen gegenüber den Ausgangspolymeren eine veränderte Polarität und bieten daher Vorteile z.B. bei der Herstellung von Kautschukmischungen und Kautschukvulkanisaten durch verbesserte Haftung an Füllstoffen und Festigkeitsträgern, bei der Herstellung von z.B. Lacken und Dichtstoffen aufgrund der höheren Adhäsion sowie als Verträglichkeitsvermittler und Kautschukkomponente in elastomermodifizierten Kunststoffen und als Verträglichkeitsvermittler in Kunststoffblends.

Aufgrund der geringeren Zahl reaktiver Stellen ist die nachträgliche Funktionalisierung von doppelbindungsarmen Kautschuken im Vergleich zu doppelbindungsreichen Kautschuken deutlich erschwert und erfordert in der Regel mehrere aufwendige Reaktionsstufen und/oder drastische Reaktionsbedingungen, die zu Veränderungen der Mikrostruktur und ungleichmäßiger Verteilung der funktionellen Gruppen im Kautschuk führen.

So ist gemäß US 5,162,445 für die einheitliche Funktionalisierung von Isoolefin-Copolymeren die Copolymerisation von Isoolefinen mit p-Methylstryrol, gefolgt von radikalischer Bromierung der aromatischen Methylgruppe und anschließender nucleophiler Austauschreaktion des Broms an der Benzylgruppe erforderlich. Neben der aufwendigen mehrstufigen Herstellungsweise sind auch die benzylischen Gruppen im Endprodukt thermisch empfindlich.

Die Addition von N-Chlorthiosulfonamiden an EPDM-Kautschuken, wie in EP 508 169 und 733 651 beschrieben, führt aufgrund der -S-N-SO₂-Bindung zu hydrolyseempfindlichen Seitengruppen.

Die radikalische Addition von Mercaptoverbindungen, wie in DE 2 653 144 für spezielle Polybutadienkautschuke beschrieben, führt bei doppelbindungsarmen Kautschuken, wie Butylkautschuk und Ethylen/Propylen/Dien-Kautschuk (EPDM), nicht zum Erfolg. Weiterhin sind aus US 5 043 394 Addukte aus hydrierten Nitril-Kautschuken und Sulfenylchlorid bekannt, die einen niedrigen Gelanteil und deren Vulkanisate gute mechanische Eigenschaften aufweisen.

Aufgabe der vorliegenden Erfindung war es nun funktionalisierte Kautschuke zur Verfügung zu stellen, deren funktionelle Gruppen hydrolysestabil an den Kautschuk gebunden sind und deren Herstellung gegenüber den bekannten Verfahren in einfacherer und wirtschaftlicherer Weise gelingt.

Gegenstand der vorliegenden Erfindung sind daher funktionalisierte doppelbindungsarme Isoolefin- und EPDM-Kautschuke mit einem Gehalt an Doppelbindungen von 0,001 bis 10 Gew.-%, vorzugsweise 0,01 bis 5 Gew.-%, besonders bevorzugt 0,05 bis 3 Gew.-%, und einem Gehalt an hydrolysestabilen und nicht über Benzylgruppen gebundenen funktionellen Gruppen von 0,01 bis 25 Gew.-%, bevorzugt 0,01 bis 15 Gew.-%, ganz besonders bevorzugt 0,1 bis 10 Gew.-%, wobei die funktionellen Gruppen die Struktur

- Sₙ - R

besitzen, worin
- R: für einen linearen oder verzweigten C₁-C₃₆-Alkylrest, bevorzugt C₁ bis C₁₈-Alkylrest oder einen C₅-C₃₆-, bevorzugt C₅ bis C₁₀-Cycloalkylrest steht, wobei die Kohlenwasserstoffketten durch ein- oder mehrere Sauerstoff-, Schwefel- oder Stickstoffatome unterbrochen sein können und zusätzlich durch Hydroxyl-, Carboxyl-, Carboxylatgruppen, durch Carbonsäurehalogenidreste, durch C₁-C₁₈-, bevorzugt - C₁-C₁₂-Carbonsäureesterreste, Amino-, C₁-C₁₂-Mono- und Dialkylaminoreste sowie deren Ammoniumsalze, C₁-C₁₂-Trialkylammoniumsalze sowie durch Nitrogruppen oder durch Halogenatome substituiert sein können, ferner einen C₆-C₁₂-Arylrest, C₇-C₃₆-, bevorzugt C₇-C₁₈-Aralkylrest, oder einen mono-, di- oder tricyclischen heterocyclischen Rest mit Stickstoff, Sauerstoff und Schwefel als Heteroatome bedeutet, wobei die Arylreste, Aralkylreste und die heterocylischen Reste wiederum durch Hydroxylgruppen, Carboxylgruppen, Carboxylatgruppen, Carbonsäurehalogenidgruppen, C₁-C₁₈-Carbonsäureestergruppen, Amino-, C₁-C₁₂-Mono- und Dialkylaminoreste sowie deren Ammoniumsalze, C₁-C₁₂-Trialkylammoniumsalze, Nitrogruppen sowie durch Halogenatome substituiert sein können, und
- n: für eine ganze Zahl von 1, 2 oder 3 steht.

Als Reste R kommen bevorzugt die nachstehend formelmäßig aufgelisteten Reste in Betracht:

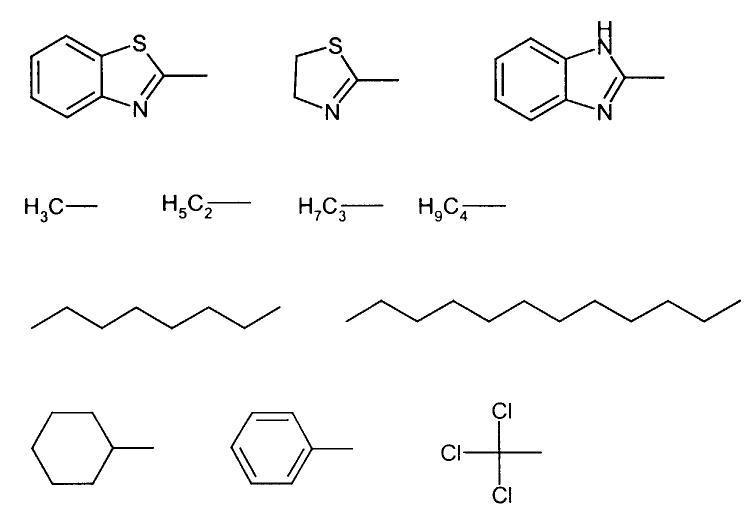

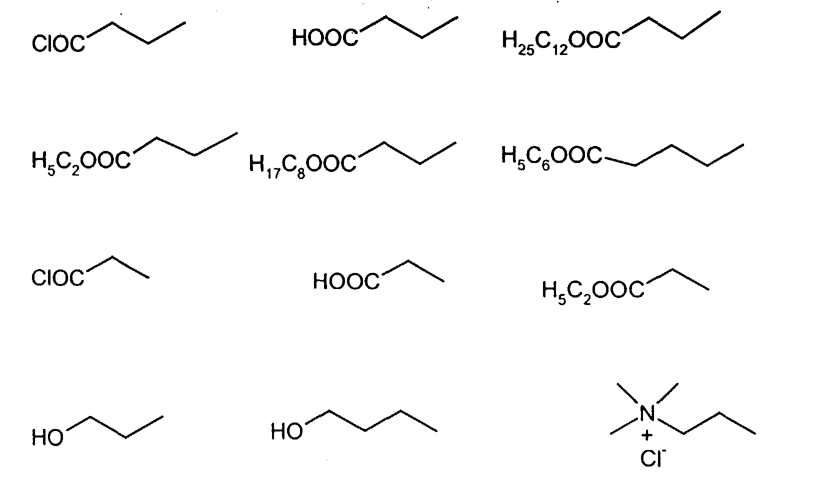

Unter dem C=C-Doppelbindungsgehalt des Kautschuks ist der Anteil der C=C-Gruppen in Gewichtsprozent bezogen auf Kautschuk zu verstehen.

Ein weiterer Gegenstand der Erfindung ist ein Verfahren zur Herstellung der funktionalisierten doppelbindungsarmen Isoolefin- und EPDM-Kautschuke, das dadurch gekennzeichnet ist, dass man einen doppelbindungsarmen Kautschuk mit einem Doppelbindungsgehalt 0,01 bis 10 Gew.-%, bevorzugt 0,05 bis 5 Gew.-%, besonders bevorzugt 0,05 bis 3 Gew.-%, mit 0,01 bis 25 Gew.-Teilen, bevorzugt 0,01 bis 15 Gew.-Teilen, ganz besonders bevorzugt 0,1 bis 10 Gew.-Teilen, bezogen auf 100 Gew.-Teile Kautschuk, eines Sulfenylchlorids der nachstehenden allgemeinen Formel

X - Sₙ - R ,

worin
- X: für ein Halogenatom, bevorzugt Chlor oder Brom, steht und
- R und n: die für die zuvor bezeichnete funktionelle Gruppe genannte Bedeutung haben,
bei Temperaturen im Bereich von -120°C bis +200°C umsetzt.

Bevorzugt werden nachfolgend formelmäßig dargestellte Sulfenylhalogenide in das erfindungsgemäße Verfahren eingesetzt:

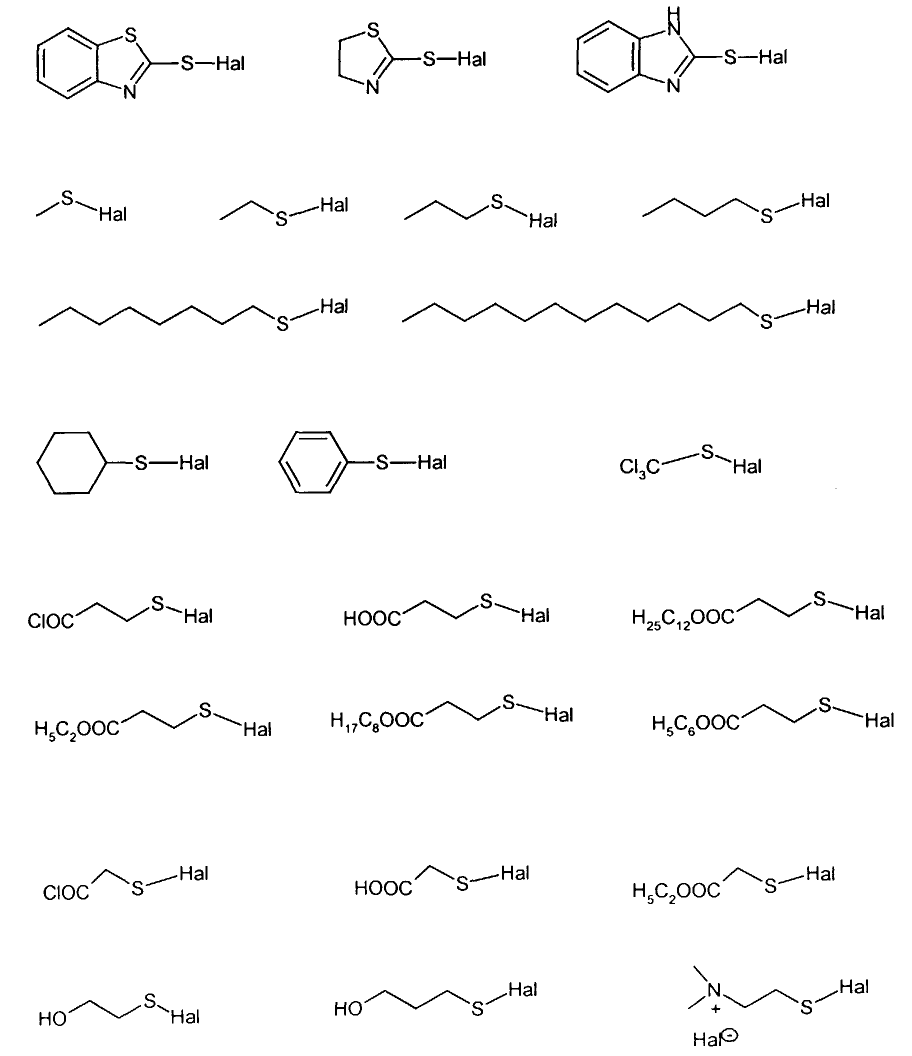

In den oben genannten Formeln bedeutet Halogen bevorzugt Chlor.

Die Herstellung der Sulfenylhalogenide erfolgt nach an sich bekannten Methoden, also z.B. durch Umsetzung von Disulfiden mit Halogenen, wie in US 2,257,974 beschrieben, oder aus Mercapatanen und Halogenen, siehe hierzu Liebigs Ann. Chem. 391, 57 (1912), oder aus Mercaptanen und Schwefeldichlorid oder Dischwefeldichlorid, oder durch Umsetzung von Sulfensäuren, Sulfensäureestern oder Sulfensäureamiden mit Halogenwasserstoffen, wie in Chem. Ber. 57, 755 (1924) beschrieben. Die Herstellung der Sulfenylhalogenide kann auch in Gegenwart der doppelbindungsarmen Kautschuke ohne Isolierung der Sulfenylhalogenids erfolgen, wobei gegebenenfalls der Kautschuk mit überschüssigem Halogen darüber hinausgehend halogeniert wird.

Die Sulfenylhalogenide werden bei Temperaturen von bevorzugt -30 bis 150° C mit den Kautschuken, in festem oder gelöstem Zustand, zur Reaktion gebracht; bevorzugt wird die Reaktion in einem Lösungsmittel durchgeführt. Geeignete Lösungsmittel sind z.B. aliphatische oder cycloaliphatische Kohlenwasserstoffe, wie Butan, Isobutan, Pentan, Hexan, Cyclohexan, Octan, Isooctan, halogenierte Kohlenwasserstoffe, wie Methylchlorid, Methylenchlorid, Chloroform, Tetrachlorkohlenstoff, Dichlorethan, Trichlorethan, Tetrachlorethan, Chlorpropan, Chlorbutan, oder chlorierte aromatische Kohlenwasserstoffe, wie Chlorbenzol. Der Gehalt an gelöstem Kautschuk liegt im Bereich von 0,1 bis ca. 40 Gew.-%, bevorzugt 10 - 25 Gew.-%, und wird in der Regel aus wirtschaftlichen Gründen möglichst hoch gewählt.

Die Umsetzung der doppelbindungarmen Kautschuke mit den Sulfenylhalogeniden erfolgt im Sinne einer Addition eines Halogenatoms und hydrolysestabiler Addition der entsprechenden Reste an die Doppelbindungen. Abhängig von der Kautschuksorte und der Art der Doppelbindung kann im Laufe der Addition auch Halogenwasserstoff abgespalten werden, so dass sich Doppelbindungen zurückbilden. Die Abspaltung von Halogenwasserstoff kann gegebenenfalls durch die Zugabe von Säurefängern und Basen gefördert werden.

Bevorzugte doppelbindungsarme Isoolefin- und EPDM-Kautschuke, die mit den Sulfenylhalogeniden zur Reaktion gebracht werden sind:
(A) Isoolefin-Terpolymere, bestehend aus Isoolefinen mit 4 bis 16 Kohlenstoffatomen, konjugierten Diolefinen mit 4 bis 6 Kohlenstoffatomen und gegebenenfalls weiteren ein- oder mehrfach ungesättigten Verbindungen mit 2 bis 20 Kohlenstoffatomen mit einem Molekulargewicht von 10 000 bis 3 000 000 g/Mol, bevorzugt 50 000 bis 2 000 000 g/Mol, besonders bevorzugt 100 000 bis 1 000 000 g/Mol, wobei das sich zu 100 ergänzende molare Verhältnis von Isoolefinen zu Diolefinen zu ungesättigten, organischen Verbindungen 50 bis 99,5 zu 0,5 bis 20 zu 0 bis 30, bevorzugt 80 bis 99,5 zu 0,5 bis 10 zu 0 bis 20, besonders bevorzugt 90 bis 99,5 zu 0,5 bis 10 zu 0 bis 10, beträgt.
   Bevorzugte Isoolefine sind Isobuten, 2-Methyl-l-buten, 2,3-Dimethyl-l-buten, 2-Methyl-l-penten und β-Pinen, insbesondere Isobuten und 2-Methyl-l-buten.
   Bevorzugte konjugierte Diolefine sind Isopren, Butadien, 2,3-Dimethylbutadien, Cyclopentadien, Methylcyclopentadien, 1,3-Cyclohexadien, besonders bevorzugt Isopren.
   Als ein- oder mehrfach ungesättigte Verbindungen kommen Olefine und Vinylaromaten in Frage, bevorzugt 1-Olefine mit 2 bis 20 Kohlenstoffatomen, wie Ethen, Propen, 1-Buten, 1-Penten, 1-Hexen, 1-Hepten, 1-Octen, 1-Nonen, 1-Decen, 5-Vinyl-2-norbornen, insbesondere Ethen und Propen, sowie Vinylaromaten, insbesondere Styrol, p-Methylstyrol, alpha-Methylstyrol und Vinylnaphthalin, besonders bevorzugt werden Styrol und p-Methylstyrol.
   Entsprechende chlorierte und bromierte Kautschuke mit Chlor- bzw. Bromgehalten von 0,01 bis 5 Gew.-%, bevorzugt 0,1 bis 3 Gew.-%, sind ebenfalls geeignet.
   Geeignete Terpolymere besitzen eine Mooney-Viskosität ML 1+8 (125° C) von 5 bis 200, bevorzugt 20 bis 100. Siehe hierzu I. Franta, Elastomers and Rubber Compounding Materials, Elsevier, Amsterdam 1989, Seiten 168 bis 180. Besonders bevorzugte Produkte dieser Art sind als Butylkautschuk, Brombutyl- und Chlorbutylkautschuk im Handel erhältlich (z.B. Polysar Butyl® der Bayer AG).
(B) Ethylen/Propylen/Dien-Terpolymerisate (EPDM): Diese umfassen Kautschuke, in denen das Gewichtsverhältnis von Ethylen- zu Propylen-Monomer im Bereich 30 : 70 bis 70 : 30 liegt und die 1 bis 20 C=C-Doppelbindungen pro 1.000 C-Atome aufweisen können. Als geeignete Dien-Monomere im EPDM seien beispielsweise genannt: konjugierte Diene, z.B. Isopren und Butadien-1.3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene. Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM. Bevorzugte Produkte besitzen besitzen Mooney-Viskositäten ML 1+4 (125° C) von 10 bis 200, bevorzugt 15 bis 100. Siehe hierzu I. Franta, Elastomers and Rubber Compounding Materials, Elsevier, Amsterdam 1989, Seiten 131 bis 143. Derartige EPDM-Kautschuke sind im Handel erhältlich (z.B. Buna® EP der Bayer AG).

Die erfindungsgemäßen doppelbindungsarmen funktionalisierten Isoolefin- und EPDM-Kautschuke besitzen gegenüber den Ausgangspolymeren eine veränderte Polarität und bieten daher Vorteile z.B. bei der Herstellung von Kautschukmischungen mit verbesserter Füllstoff/Kautschuk-Wechselwirkung, verbesserter Adhäsion an Festigkeitsträgern und verbesserter Verträglichkeit mit anderen polaren Kautschuken.

Als Füllstoffe kommen für die Kautschukmischungen alle bekannten in der Kautschukindustrie verwendeten Füllstoffe in Betracht, diese umfassend sowohl aktive als auch inaktive Füllstoffe.

Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen;
- synthetische Silikate, wie Aluminiumsilikat, Erdalkalisilikat wie Magnesiumsilikat oder Calciumsilikat, mit BET-Oberflächen von 20 - 400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße. Die hierbei zu verwendenden Russe sind nach dem Flammruß, Furnace- oder Gasrußverfahren hergestellt und besitzen BET-Oberflächen von 20 bis 200 m²/g, z.B. SAF-, ISAF-, HAF-, FEF- oder GPF-Ruße;
- Kautschukgele, insbesondere solche auf Basis Polybutadien, Butadien/Styrol-Copolymere, Butadien/Acrylnitril-Copolymere und Polychloropren.

Bevorzugt werden als Füllstoffe eingesetzt hochdisperse Kieselsäuren und/oder Ruße.

Die Kautschukmischungen können neben den erfindungsgemäßen doppelbindungsarmen funktionalisierten Isoolefin- und EPDM-Kautschuken weitere bekannte Kautschuke enthalten. Das sind neben Naturkautschuk insbesondere Synthesekautschuke. Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials, Elsevier, Amsterdam 1989 beschrieben. Sie umfassen u.a.
- ABR -: Butadien/Acrylsäure-C₁-C₄ -alkylester-Copolymere
- ACM -: Polyacrylat-Kautschuk
- BR -: Polybutadien
- CR: Polychloropren
- CM -: chloriertes Polyethylen
- CSM -: chlorsulfoniertes Polyethylen
- ECO -: Epichlorhydrin-Kautschuk
- EPDM -: Ethylen/Propylen/Dien-Terpolymer
- FKM -: Fluorkautschuk
- IR -: Polyisopren
- IIR -: Isobutylen/Isopren-Copolymerisate
- NBR -: Butadien/Acrylnitril-Copolmere mit Acrylnitrilgehalten von 5 - 60, vorzugsweise 10 - 40 Gew.-%
- HNBR -: teilhydrierter oder vollständig hydrierter NBR-Kautschuk
- Q -: Silikonkautschuk
- SBR -: Styrol/Butadien-Copolymerisate mit Styrolgehalten von 1 - 60, vorzugsweise 20 - 50 Gew.-%
sowie Mischungen dieser Kautschuke.

Selbstverständlich können die erfindungsgemäßen Kautschukmischungen noch andere Kautschukhilfsmittel enthalten, die beispielsweise der Vernetzung der aus den Kautschukmischungen hergestellten Vulkanisate dienen, oder die die physikalischen Eigenschaften der aus den erfindungsgemäßen Kautschukmischungen hergestellten Vulkanisate für deren speziellen Einsatzzweck verbessern.

Als Vernetzeragentien können beispielsweise Schwefel oder Schwefel-liefernde Verbindungen eingesetzt werden, so wie Radikale-liefernde Vernetzeragentien, wie organische Peroxide. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Teilen, bezogen auf 100 Gew.-Teile Kautschuk.

Die Kautschukmischungen können z.B. hergestellt werden durch Abmischung der erfindungsgemäßen doppelbindungsarmen funktionalisierten Kautschuke mit den entsprechenden Füllstoffen, gegebenenfalls weiteren Kautschuken und Kautschukhilfsmitteln in geeigneten Mischapparaturen, wie Knetern, Walzen oder Extrudern.

Ein weiterer Gegenstand der vorliegenden Erfindung ist die Verwendung der erfindungsgemäßen Kautschuke zur Herstellung von Vulkanisaten, die wiederum für die Herstellung von Kautschuk-Formkörpern dienen, insbesondere für die Herstellung von Reifen, z.B. Reifenschläuche, Reifenlaufflächen und -seitenwänden und Innerliner sowie technischen Gummiartikeln, z.B Heizbälge, Schläuche und gummierte Gewebe.

Die erfindungsgemäßen funktionalisierten doppelbindungsarmen Isoolefin- und EPDM-Kautschuke können darüber hinaus auch verwendet werden zur Herstellung von Klebstoffen, Dichtstoffen, Lacken sowie als Kautschukkomponente in Kautschuk/Kunststoff-Blends.

### Beispiele:

### Beispiel 1

### Mit 3,3 Gew.-% Thiobenzthiazolgruppen modifizierter Butylkautschuk

In eine Suspension von 6,64 g Dithiodibenzthiazol (Vulkacit DM, Bayer AG) in 80 ml trockenem Chlorbenzol wurde bei 0°C 1,42 g Chlor eingeleitet, so dass sich eine klare orange gefärbte Lösung des Mercaptobenzthiazolsulfenchlorids bildete.

Diese Lösung wurde bei Raumtemperatur unter Rühren zur einer Lösung aus 200 g Butylkautschuk Polysar Butyl 402 (Isobutylen/Isopren-Terpolymer der Bayer AG mit 2,2 mol % einpolymerisiertem Isopren, entsprechend 0,9 Gew.-% C=C-Doppelbindungsgehalt) in 2 l Cyclohexan gegeben. Nach 4 stündigem Rühren bei 80°C hatte sich das Mercaptobenzthiazolsulfenchlorid vollständig umgesetzt und die hellgelbe Farbe der Lösung war entfärbt. Nach Zusatz von 1 g Vulkanox BKF (phenolisches Alterungsschutzmittel der Bayer AG) wurde der Kautschuk mittels Wasserdampfdestillation aufgearbeitet. Nach dem Trocknen im Vakuum bei 70°C erhielt man 206 g eines hellen Polymers mit der Viskosiät ML 1+4 (100°C) 50.

Das ¹H-NMR weist neben den aliphatischen Protonen des Butylkautschuks Signale für die aromatischen Protonen des Mercaptobenzthiazols bei 7,3 - 8 ppm sowie Signale für olefinische Protonen bei 5 - 5,2 ppm auf. Mittleres Molgewicht (M_{W} bestimmt mittels GPC): 382.000.

| | | |
|---|---|---|
| Elementaranalyse: | Schwefel: | 1,2 Gew.-% |
| | Stickstoff: | 0,3 Gew.-% |
| | Chlor: | 0,22 % |

### Beispiel 2

### Mit 3,3 Gew.-% Thiobenzthiazolgruppen modifizierter EPDM-Kautschuk

In eine Suspension von 16,6 g Dithiodibenzthiazol (Vulkacit DM, Bayer AG) in 100 ml trockenem Chlorbenzol wurde bei 0°C 3,6 g Chlor eingeleitet, so dass sich eine klare orange gefärbte Lösung des Mercaptobenzthiazolsulfenchlorids bildete.

Diese Lösung wurde bei Raumtemperatur unter Rühren zur einer Lösung aus 500 g Buna EP T 3950 (EPDM-Kautschuk der Bayer AG, mit 56 Gew.-% Ethylengehalt und 11 Gew.-% ENB-Gehalt entsprechend 2,2 Gew.-% C=C-Doppelbindungsgehalt) in 4 l Cyclohexan gegeben. Nach 4 stündigem Rühren bei Raumtemperatur hatte sich das Mercaptobenzthiazolsulfenchlorid vollständig umgesetzt und die hellgelbe Farbe der Lösung war entfärbt. Nach Zusatz von 1 g Vulkanox BKF (phenolisches Alterungsschutzmittel der Bayer AG) wurde der Kautschuk mittels Wasserdampfdestillation aufgearbeitet. Nach dem Trocknen im Vakuum bei 70°C erhielt man 516 g eines hellen Polymers. ML 1+4 (100°C) 72.

### Beispiel 3

### Mit 2,1 Gew.-% 3-Thiopropionsäuregruppen modifizierter Butylkautschuk

Eine Lösung von 16 g 3-Chlorthio-propionsäurechlorid (CAS-RN 14274-19-2) in 100 ml Chlorbenzol wurde bei Raumtemperatur unter Rühren zu einer Lösung aus 500 g Butylkautschuk Polysar Butyl 402 (Isobutylen/Isopren-Terpolymer der Bayer AG mit 2,2 mol % einpolymerisiertem Isopren, entsprechend 0,9 Gew.-% C=C-Doppelbindungsgehalt) in 4 l Cyclohexan gegeben. Nach 4 stündigem Rühren hatte sich das 3-Chlorthio-propionsäurechlorid vollständig umgesetzt und die hellgelbe Farbe der Lösung war entfärbt. Nach Zusatz von 100 g Wasser und 1 g Vulkanox BKF (phenolisches Alterungsschutzmittel der Bayer AG) wurde der Kautschuk mittels Wasserdampfdestillation aufgearbeitet. Nach dem Trocknen im Vakuum bei 70°C erhielt man 516 g eines hellen Polymers mit der Viskosiät ML 1+4 (100°C) 50.

### Beispiel 4:

### Mit 1 Gew.-% 3-Thiopropionsäuregruppen modifizierter Butylkautschuk

7,95 g (0,05 mol) 3-Chlorthiopropionsäurechlorid wurden nach dem Verfahren aus Beispiel 3 mit 500 g Butylkautschuk Polysar Butyl 402 umgesetzt. Es wurden 506 g eines hellen Butylkautschuks mit der Viskosität ML 1+4 (100° C) 79 und einem S-Gehalt von 0,35 Gew.-%.

### Beispiel 5:

Die folgenden Substanzen wurden in einem 1,5 l Kneter (Drehzahl 70 UpM, Füllgrad 65 %, Starttemperatur 50°C, Dauer: 5 Minuten) gemischt. Anschließend wurden die Mischungen entnommen, erkalten lassen und Schwefel und Beschleuniger auf einer Walze bei 40°C Walzentemperatur zugemischt:

| **Mischungsbestandteile:** | **Vergleich** | **Beispiel 4.A** |
|---|---|---|
| im 1,5 l Kneter wurden gemischt: | | |
| Butylkautschuk Polysar Butyl 402 (Bayer) | 30 | 0 |
| funktionalisierter Butylkautschuk gem. Bsp. 4 | 0 | 30 |
| Naturkautschuk TSR 5 | 70 | 70 |
| Ruß Corax N 339 (DegussaHüls) | 50 | 50 |
| Stearinsäure | 2 | 2 |
| Zinkoxid RS (Bayer AG) | 5 | 5 |
| Alterungsschutzmittel Vulkanox 4020 (Bayer) | 1,5 | 1,5 |
| Alterungsschutzmittel Vulkanox HS (Bayer) | 1 | 1 |
| auf der Walze wurden zugemischt: | | |
| Sulfenamidbeschleuniger Vulkacit CZ (Bayer) | 1,4 | 1,4 |
| Schwefel | 1,2 | 1,2 |
| Mischungsvsikosität ML 1+4 (100° C) | 83 | 91 |
| die Mischungen wurden anschließend bei 160° C vulkanisiert. | | |
| Vulkanisationszeiten: | 10 | 10 Min. |

| **Vulkanisateigenschaften:** | | |
|---|---|---|
| Spannungswert bei 300 % Dehnung (Mpa) | 14,2 | 14,8 |
| Zugfestigkeit (MPa) | 18 | 22,1 |
| Bruchdehnung (%) | 380 | 440 |
| Härte bei 23° C (Shore A) | 69 | 68 |
| Rückprallelastizität bei 23° C (%) | 30 | 31 |
| Weiterreißfestigkeit DIN 53515 (N/mm) | 15,3 | 55 |
| Abrieb DIN 53516 (ccm) | 141 | 126 |

Die Prüfergebnisse belegen das verbesserte mechanische Eigenschaftsniveau der erfindungsgemäßen Kautschukvulkanisate, die den funktionalisierten Butylkautschuk enthalten, insbesondere höhere Zugfestigkeit und höhere Weiterreißfestigkeit sowie das verbesserte Abriebverhalten.

## Patentansprüche

1. Funktionalisierte doppelbindungsarme Isoolefin- und EPDM-Kautschuke mit einem Gehalt an Doppelbindungen von 0,001 bis 10 Gew.-% und einem Gehalt an hydrolysestabilen und nicht über Benzylgruppen gebundenen funktionellen Gruppen von 0,01 bis 25 Gew.-%, wobei die funktionellen Gruppen die Struktur
- Sₙ - R
besitzen, worin
R für einen linearen oder verzweigten C₁-C₃₆-Alkylrest oder einen C₅-C₃₆-Cycloalkylrest steht, wobei die Kohlenwasserstoffketten durch ein- oder mehrere Sauerstoff-, Schwefel- oder Stickstoffatome unterbrochen sein können und zusätzlich durch Hydroxyl-, Carboxyl-, Carboxylatgruppen, durch Carbonsäurehalogenidreste, durch C₁-C₁₈-Carbonsäureesterreste, Amino-, C₁-C₁₂-Mono- und Dialkylaminoreste sowie deren Ammoniumsalze, C₁-C₁₂-Trialkylammoniumsalze sowie durch Nitrogruppen oder durch Halogenatome substituiert sein können, ferner einen C₆-C₁₂-Arylrest, C₇-C₃₆-Aralkylrest oder einen mono-, di- oder tricyclischen heterocyclischen Rest mit Stickstoff, Sauerstoff und Schwefel als Heteroatome bedeutet, wobei die Arylreste, Aralkylreste und die heterocylischen Reste wiederum durch Hydroxylgruppen, Carboxylgruppen, Carboxylatgruppen, C₁-C_{..}-Carbonsäurehalogenidgruppen, C₁-C₁₈-Carbonsäuregruppen, Amino-, C₁-C₁₂-Mono- und Dialkylaminoreste sowie deren Ammoniumsalze, C₁-C₁₂-Trialkylammoniumsalze, Nitrogruppen sowie durch Halogenatome substituiert sein können und
n für eine ganze Zahl von 1, 2 oder 3 steht.

2. Verfahren zur Herstellung der funktionalisierten doppelbindungsarmen Isoolefin- und EPDM-Kautschuke nach Anspruch 1, dadurch gekennzeichnet, dass man einen doppelbindungsarmen Kautschuk mit einem Doppelbindungsgehalt von 0,001 bis 10 Gew.-% mit 0,01 bis 25 Gew.-Teilen, bezogen auf 100 Gew.-Teile Kautschuk, eines Sulfenylchlorids der nachstehenenden allgemeinen Formel
X - Sₙ - R ,
worin
X für ein Halogenatom steht und
R und n die im Anspruch 1 genannte Bedeutung haben,
bei Temperaturen im Bereich von -120°C bis +200°C umsetzt.

3. Verwendung der funktionalisierten doppelbindungsarmen Isoolefin- und EPDM-Kautschuke nach Anspruch 1 zur Herstellung von Kautschukvulkanisaten, Klebstoffen, Dichtstoffen, Lacken und Kautschuk/Kunststoff-Blends.

4. Verwendung der funktionalisierten doppelbindungsarmen Isoolefin- und EPDM-Kautschuke zur Herstellung von Kautschuk-Formkörpern, insbesondere Reifen und technischen Gummiartikeln.
